# EUROPEAN PATENT APPLICATION

(11) **EP 4 283 306 A1**
(43) Date of publication of application: **29.11.2023**
(21) Application number: 22742667.3
(22) Date of filing: 21.01.2022
(51) Int. Cl.: G01N 35/02, G01N 21/03, G01N 21/78, G01N 27/27, G01N 27/30, G01N 27/416

(54) **MICROPLATE, MEASUREMENT METHOD USING SAME, AUTOMATIC MEASUREMENT SYSTEM, AND PROGRAM**

(30) Priority: 23.01.2021 JP 2021009216
(71) Applicant: Provigate Inc., Tokyo 113-0033 (JP)
(72) Inventor: KATAYAMA Norikazu, Tokyo 113-0033 (JP); KUMAGAI Yoko, Tokyo 113-0033 (JP); ITO Narushi, Tokyo 113-0033 (JP)
(74) Representative: Michalski Hüttermann & Partner Patentanwälte mbB
(86) International application number: PCT/JP2022/002089
(87) International publication number: WO 2022/158548

(57) **Abstract**

According to an embodiment of the present disclosure, there is provided a microplate including at least one (or a plurality of) well and an electrochemical sensor.

## Description

### Technical Field

The present disclosure relates to a microplate, a measurement method using the microplate, an automated measurement system, and a program.

### Background Art

Hitherto, microplates have been used for various biochemical analyses, medical diagnoses etc. By using a microplate in an automated pipetting device, it is possible to obtain a large number of data with good reproducibility and efficiency under the same conditions. Microplate readers can perform optical measurements, such as absorbance, fluorescence, and luminescence, using microplates. A microplate provided with an optical measurement cell that receives probe light incident from one side is also known (Patent Literature 1).

### Citation List

### Patent Literature

PTL 1: Japanese Unexamined Patent Application Publication No. 2016-24054

### Summary of Invention

However, optical measurements are not suitable, for example, for small amounts of target solutions. When electrochemical measurement is performed, it is necessary to take out a microplate from a main device once and introduce the microplate into an appropriate sensing device. This can cause errors in the reaction time from preparation such as mixing solutions in the microplate to electrochemical measurement.

In some embodiments of the present disclosure, a microplate (cartridge) including a sensor is provided.

In some embodiments, there is provided a microplate (cartridge) including an optical measurement well and an electrochemical sensor.

In some embodiments of the present disclosure, there is provided an automated measurement system including or using a microplate.

In some embodiments of the present disclosure, there is provided a measurement method using a microplate including a sensor, a control method therefor, and a program or a storage medium therefor.

This enables, for example, relatively accurate or small error measurements to be performed for trace amounts of the target substance. For example, in the case of multiple measurements (optical measurement and one or more sensor measurements), measurements with small inter-measurement errors can be made, or multiple measurements can be made in parallel.

Additional aspects and advantages of the present disclosure will become readily apparent to those skilled in this art from the following detailed description, wherein only exemplary embodiments of the present disclosure are shown and described. As will be realized, the present disclosure is capable of other and different embodiments, and its several details are capable of modifications in various obvious respects, all without departing from the disclosure. Accordingly, the drawings and description are to be regarded as illustrative in nature, and not as restrictive.

### Brief Description of Drawings

[Fig. 1] Fig. 1 is a schematic side view illustrating the configuration of a microplate according to an embodiment.
[Fig. 2] Fig. 2 is a schematic side view illustrating the use of a microplate according to an embodiment.
[Fig. 3] Fig. 3 is a schematic side view illustrating the use of a microplate according to the embodiment.
[Figs. 4A to 4D] Figs. 4A to 4D are schematic side views each illustrating the use of a microplate according to an embodiment.
[Figs. 4E to 4G] Figs. 4E to 4G are schematic side views each illustrating the use of a microplate according to an embodiment.
[Fig. 5] Fig. 5 illustrates a top view and a cross-sectional view of a microplate according to an embodiment.
[Fig. 6] Fig. 6 is an exploded view of a sensor according to an embodiment.
[Fig. 7] Fig. 7 is an exploded view of a sensor according to an embodiment.
[Fig. 8] Fig. 8 is an external perspective view of a microplate and the main body of a measuring device according to an embodiment.
[Fig. 9] Fig. 9 is a cross-sectional view of a microplate and the main body of a measuring device according to an embodiment.
[Fig. 10] Fig. 10 is a perspective view of a microplate according to an embodiment.
[Fig. 11] Fig. 11 illustrates a top view and a cross-sectional view of a microplate according to an embodiment.

### Description of Embodiments

### <Measurement Target>

In some embodiments, a subject (target) may include a human being or may be a human being. In some embodiments, the subject may include an animal other than human beings or may be an animal other than human beings. The subject may include a mammal or may be a mammal. The subject may be, for example, but not limited to, a working animal, a domestic animal, a pet, or a wild animal.

A sample to be measured may be a solution. The "solution" may be a body fluid, a solution derived from a body fluid, or a dilute fluid of a body fluid. The solution may be a solution that is not a body fluid (derived from a non-body fluid), or may be a mixture of a body fluid or a solution derived from a body fluid and a solution derived from a non-body fluid. The solution may be a solution used for a sample measurement or a solution used for a calibration measurement. For example, the solution may be a standard solution or a calibration solution. For example, the solution may be a liquid intentionally or deliberately free from a target substance to be measured, as it is used for calibration or the like. The sample to be measured may be a specimen. The solution may be a solution containing a chemical substance.

The "body fluid" may be lymph fluid, may be tissue fluid, such as interstitial fluid, intercellular fluid, or interstitial fluid, body cavity fluid, serosal cavity fluid, pleural fluid, ascites fluid, pericardial fluid, cerebrospinal fluid (spinal fluid), joint fluid (synovial fluid), and aqueous humor of the eye (aqueous). The body fluid may be a digestive juice, such as saliva, gastric juice, bile, pancreatic juice, or intestinal juice, and may be sweat, tears, nasal mucus, urine, semen, vaginal fluid, amniotic fluid, or milk. The body fluid may be a body fluid of an animal or may be a body fluid of a human being. The "body fluid" may be a solution. The solution contains a target substance to be measured. The solution may contain a physiological buffer, such as phosphate-buffered saline (PBS) or N-tris(hydroxymethyl)methyl-2-aminoethanesulfonic acid buffer solution (TES), containing a substance to be measured. The solution is not particularly limited as long as it contains the substance to be measured.

The solution may contain a target substance to be measured. The solution may have the possibility to contain the target substance to be measured. In some embodiments, the target substance to be measured may be, for example, a molecule, an ion, a macromolecule, or a biomolecule. The target substance to be measured may contain a biomolecule. The target substance to be measured may be a protein or a glycated protein, for example. For example, the solution may be tears, and the target substance to be measured may be albumin, glycoalbumin, hemoglobin, and/or glycohemoglobin contained in tears. Alternatively, the target substance to be measured may be albumin, glycoalbumin, hemoglobin, or glycohemoglobin in blood, serum, or plasma, or may be albumin, glycoalbumin, hemoglobin, or glycohemoglobin in interstitial fluid, urine, or saliva. The albumin may be oxidized albumin (HNA) or reduced albumin (HMA). In some embodiments, the target substance to be measured may be an advanced glycation end product (AGE) . In some embodiments, the target substance to be measured may be a glycated lipid.

### <Sensor>

A sensor may be, for example, a chemical sensor, a biosensor, or an ion sensor (hereinafter sometimes referred to as a "sensor", a "biochemical sensor", a "chemical sensor", or an "electrochemical sensor"). The sensor may include multiple sensors.

The sensor may include an electrode. The electrode may be an amperometric electrode. The electrode may include a hydrogen peroxide electrode. The electrode may include an oxygen electrode. The electrode may be a potentiometric electrode. The electrode may be an electrode for ion detection (for example, a pH electrode, a cyanide ion electrode, or an iodide ion electrode).

In some embodiments, the sensor may output an electrical signal. In some embodiments, the sensor may output a current signal. The sensor may output a voltage signal or an electric charge. The sensor may be electrically coupled to, for example, an ammeter or a voltmeter.

### <Measurement of Hydrogen Peroxide>

In some embodiments, the produced glycated amino acid may be reacted with ketoamine oxidase to generate hydrogen peroxide. In some embodiments, the amount (concentration) of hydrogen peroxide generated may be measured. In some embodiments, the amount (concentration) of hydrogen peroxide may be measured electrically.

The term "ketoamine oxidase" generally refers to an oxidase that recognizes a ketoamine structure of a glycated amino acid or a peptide or peptide fragment containing a glycated amino acid residue and oxidizes the glycated amino acid to produce an amino acid, glucosone (a-ketoaldehyde), and hydrogen peroxide. Thus, ketoamine oxidase generates hydrogen peroxide in a concentration proportional to or related to the concentration of the peptide or peptide fragment containing the glycated amino acid or glycated amino acid residue it recognizes.

The ketoamine oxidase may be a dehydrogenase, a kinase, or an oxidase. The ketoamine oxidase may be fructosyl amino acid oxidase (FAOD), fructosyl peptide oxidase, fructosyl valyl histidine oxidase, fructosyl amine oxidase, amadoriase, fructosyl amine dehydratase, or a modified form thereof.

In some embodiments, the ketoamine oxidase may be an oxidase that acts on an amino acid or peptide in which an α-amino group is glycated (Group I ketoamine oxidase) . The amino acid or peptide may be valine, glycine, valyl histidine. A glycated hemoglobin sensor or glycated hemoglobin A1c (HbA1c) sensor can be configured by using an oxidase that acts on an amino acid or a peptide having a glycated α-amino group.

In some embodiments, the ketoamine oxidase may be an oxidase that acts on an amino acid or peptide having a glycated ε-amino group (Group II ketoamine oxidase) . The amino acid may be lysine. The glycated amino acid may be fructosyl lysine. A glycoalbumin sensor can be configured by using an oxidase that selectively acts on an amino acid or peptide having a glycated ε-amino group.

In some embodiments, the ketoamine oxidase may be an oxidase that acts on an amino acid or peptide having a glycated α-amino group and/or a glycated ε-amino group (Group III ketoamine oxidase) . The amino acid or peptide may be lysine, valine, glycine, or valylhistidine. A glycated protein sensor can be configured by using an oxidase that acts on an amino acid or a peptide having a glycated α-amino group and/or a glycated ε-amino group.

In some embodiments, the sensor may include a detector. The detector may be a hydrogen peroxide detector. The "hydrogen peroxide detector" (hydrogen peroxide sensor) may be an electrochemical electrode or a hydrogen peroxide electrode. The hydrogen peroxide electrode may include a counter electrode, a reference electrode, and a working electrode. In an embodiment, the detector may detect oxygen. For example, the amount or concentration of oxygen that decreases because of an enzyme reaction may be detected. Oxygen detection is considered to be relatively insensitive to molecules and ions that are noise sources and resistant to interference. Oxygen consumption may be measured by oxygen detection. The detector is saturated with air and may be used for enzyme sensing. The detector may be configured to perform multiple detection methods selectively or in combination.

### <Noise Reduction Using Ion Exchange Resin>

In some embodiments, the sensor may include an ion-exchange resin on the detector. The sensor may include an ion-exchange resin between a ketoamine oxidase layer and a hydrogen peroxide electrode .

For example, a cation-exchange resin, such as Nafion (registered trademark), can be used to inhibit or prevent, for example, ascorbic acid, uric acid, and in particular, anions and so forth present in the body fluid from permeating and reaching the detector. For example, an anion-exchange resin, such as polypyrrole, can be used to inhibit or prevent dopamine, in particular, cations and so forth, from passing through and reaching the detector.

The ion-exchange resin may contain one, a plurality of, or at least one type of ion-exchange resin. The ion-exchange resin may be configured to have one, more than one, or at least one type of layer.

### <Molecularly Imprinted Polymer Sensor>

The sensor may include a molecular imprinted polymer (MIP) membrane. A change in charge or potential caused by the molecular recognition of MIP may be detected (potentiometric type) . A change in current (e.g. mediator current) flowing through the electrode caused by the molecular recognition of MIP may be detected (amperometric type).

### <Protease>

"Protease" is a generic term for peptide-bond hydrolases that hydrolyze and catabolize proteins and polypeptides. A protease may be an enzyme that breaks down a protein into peptide fragments. When a protein contains a glycated amino acid residue, peptide fragments produced by the action of a protease may include peptide fragments containing a glycated amino acid residue and peptide fragments that are not glycated at all.

The "protease" may be a protease derived from an animal, a protease derived from a plant, or a protease derived from a microorganism. The protease may be an exopeptidase or an endopeptidase. The protease may be an aspartic protease, a metalloprotease, a serine protease, or a thiol protease.

The "protease" may include multiple types or kinds of protease, and may include one type or kind of protease. For example, the protease may include one or both of an endopeptidase and an exopeptidase. The degradation efficiency may be increased by mixing multiple proteases.

The animal-derived protease may be, for example, trypsin, chymotrypsin, elastase, bovine pancreatic protease, cathepsin, calpain, protease type-I, protease type-XX, aminopeptidase N, carboxypeptidase, or pancreatin (a mixture of multiple enzymes such as protease and amylase).

The plant-derived protease may be, for example, papain, bromelain, gingipain, kallikrein, ficin, or chymopapain.

The protease derived from a microorganism may be, for example, a Bacillus-derived protease, an Aspergillus-derived protease, a Penicillium-derived protease, a Streptomyces-derived protease, a Lysobacter-derived protease, a yeast-derived protease, a Tritirachium-derived protease, a Thermus-derived protease, a Pseudomonas-derived protease, or an Achromobactaer-derived protease.

In some embodiments, the protease may be provided in a liquid form and mixed with a solution. In some embodiments, the protease may be added to or mixed with a solution in solid form (for example, a powder). In some embodiments, the protease may be loaded on a support material and introduced into a solution. The protease may be supported on, for example, a flat plate, a curved surface, a sphere, a bead, a biomolecule such as a protein, or a polymer.

### <Optical Measurement>

The term "optical measurement" used herein generally refers to determining optical properties of a substance using an optical element or device. In some embodiments, optical measurement of the substance of interest may be measured. In some embodiments, the properties of a substance bound to or associated with a target substance (hereinafter, a substance (for example, a reagent) chemically, biologically, or physically bound to or associated with the target substance, even if it is not the target substance itself) may be measured. Properties of the reagent may be measured. The reagent may be referred to as a "target substance".

In some embodiments, the optical measurement may include a spectroscopic measurement. For example, the absorbance of the target substance may be measured. In some embodiments, a color indicator corresponding to the target substance may be introduced. The color indicator may be detected or measured.

### <Color Indicator>

The term "color indicator" used herein generally refers to a halochromic chemical compound. The color change may generally be reversible. Examples of the color indicator include, but are not limited to, acid-base indicators (pH indicators), oxidation-reduction indicators, adsorption indicators, and TLC color indicators. It changes the color of the solution in accordance with the pH. Examples of the pH indicator include, but are not limited to, bromocresol purple (BCP) and bromocresol green (BCG) .

In some embodiments, BCP or BCG can be used for albumin. For example, albumin binds to bromocresol green (BCG) to form an albumin-bromocresol green complex. At about pH 4, the complex is blue in color. Thus, the albumin concentration can be determined by measuring the absorbance (BCG method). A surfactant may be added to the measurement reagent. A surfactant need not be added to the measurement reagent. For example, a protein denaturing agent (such as SDS) may be or need not be incorporated.

For example, albumin binds with bromocresol purple (BCP) to form an albumin-bromocresol purple complex. This complex is blue in color. Thus, the albumin concentration can be determined by measuring the absorbance (BCP method). Typically, the concentration of albumin can also be measured by converting all reduced albumin into oxidized albumin by the action of an oxidizing agent and then performing a color reaction with BCP (improved BCP method). A surfactant may be added to the measurement reagent. A surfactant need not be added to the measurement reagent. For example, a protein denaturing agent (such as SDS) may be or need not be incorporated.

In some embodiments, a reaction in which albumin binds with bromocresol purple (BCP) or bromocresol green (BCG) to form a complex may be referred to as a "first reaction."

In some embodiments, the color indicator may be provided in a liquid form or mixed with a solution. In some embodiments, the color indicator may be added to or mixed with a solution in a solid form (for example, a powder).

### <Measurement of Absorbance>

In some embodiments, an absorptiometer (colorimeter) may be used. The absorptiometer includes a light source and a photodetector. All or a portion of light from the light source enters a target solution. All or a portion of the light passing through the solution enters the photodetector. The light absorbed by the target substance can be analyzed.

The wavelength of the light source may be appropriately selected in accordance with a color indicator used. The absorbance may be measured, for example, at a wavelength, such as a dominant wavelength, of 600 to 630 nm for BCP and 565 to 660 nm for BCG. The wavelength of the measurement may be changed in accordance with various conditions such as pH.

In some embodiments, a change in the absorbance of the color indicator over time may be measured. In some embodiments, the absorbance may be measured at at least two (or multiple) time points. For example, the total amount of protein at the beginning (before the initiation of protease degradation, t = 0) may be determined based on the measurement values at two time points. In some embodiments, the time point of initiation of protease degradation may be measured, and the total amount of protein may be determined based on measurements as a function of time from this initiation time. In some embodiments, the total amount of protein may be determined based on measurements at three or more time points . From at least three or more measured values, the total amount of original protein can be determined in some cases even when the time from the time point of initiation of protease degradation is not clear.

In some embodiments, the concentration of the protein may be determined by referring to a calibration curve, prepared in advance, presenting the relationship between the absorbance and the protein concentration. For example, a calibration curve presenting the relationship between the absorbance A (t) that changes with time (t) and its change with time (ΔA(t)/Δt) is prepared in advance. In the actual measurement, the absorbance A(t1) and its slope (ΔA(t1)/Δt) at a certain time point (t = t1) are determined. From this, the absorbance A (t = t0) at the degradation start time t = t0 of the protease can be determined.

In some embodiments, the measurement of the glycated protein may be started after a predetermined time has elapsed from the time point of the initiation of the protease degradation. In some embodiments, the measurement of the glycated protein may be started when the absorbance A is sufficiently small. In some embodiments, when the change in absorbance with time (ΔA/Δt) is substantially zero, it is determined that sufficient degradation by the protease has been completed, and measurement of the glycated protein may be started, or the measurement result of the glycated protein at that time may be used. In some embodiments, when the change in absorbance over time reaches a predetermined value, it may be determined that degradation by a predetermined protease has been achieved, and measurement of the glycated protein may be started, or the measurement result of the glycated protein at that time may be used.

In some embodiments, calibration of absorbance measurements may be performed. Optical components including an optical measurement cell, a light-emitting element, a light-receiving element, and so forth may be calibrated. For example, the absorbance may be measured before (for example, when the optical measurement cell is empty, in its initial state, etc.) and after (for example, when the measurement solution has been introduced into the optical measurement cell) the introduction of the solution into the optical components. A difference between the absorbances may be determined.

### <Microplate>

The present disclosure provides a microplate. The term "microplate" used herein generally refers to a flat plate having multiple small "wells" that function as test tubes. The microplate is also called a microtiter plate, a microwell plate, multiwells, a cartridge, or the like (hereinafter, sometimes referred to as a "microplate"). The "microplate" is typically formed in a rectangular shape, but the shape is not limited thereto. The "microplate" typically has multiple "wells" regularly arranged in rows or in a matrix, but the arrangement of the wells is not limited thereto.

At least one or multiple wells and at least one or multiple optical measurement wells may contain a pre-treatment solution, a dilution solution, a preparation solution, an enzymatic solution, a biochemical solution, an indicator solution, etc.

In some embodiments, the microplate may include an electrochemical sensor and at least one or multiple wells. In some embodiments, the microplate may include an optical measurement well, an electrochemical sensor, and at least one or multiple wells.

The present disclosure provides a sensor. In some embodiments of the present disclosure, the microplate may include a sensor. In some embodiments, the microplate may be configured such that a sensor is attached or fixed thereto. For example, the sensor may be manufactured separately from the microplate and attached to the microplate. For example, the microplate and the sensor may be individually introduced into a measurement apparatus. For example, the microplate and the sensor may be combined in the measurement apparatus. The microplate and the sensor may be physically separated, substantially combined, associated with each other, or cooperate in the measurement apparatus to perform a measurement solution preparation and measurement. For example, one sensor may be used for multiple microplates and may be used repeatedly. In some embodiments, the sensor may be integrally molded with the microplate.

### <Configuration Example of Microplate>

In some embodiments, the microplate may include:
at least one of:
(a0) a diluent well containing a diluent,
(b0) a filter well fitted with a filter,
(c0) an optical measurement preparation liquid well containing a preparation liquid for optical measurement,
(d0) an indicator solution well containing an indicator solution,
(e0) a first stirring well for use in stirring a solution,
(f0) an optical measurement well that enables entry of light from the outside and extraction of light to the outside,
(g0) an electrochemical measurement preparation liquid well containing a preparation (for example, enzyme) solution for electrochemical measurement,
(h0) a second stirring well for use in stirring a solution,
(i0) a sensor cleaning liquid well containing a sensor cleaning liquid, and
(j0) a sensor calibration liquid well containing a sensor calibration liquid;
   and
(s0) an electrochemical sensor.

In some embodiments, optical measurement may be used to measure the concentration of a target protein in a target sample. In some embodiments, the concentration of the target glycated protein in a target sample may be measured by electrical measurement or with an electrochemical sensor.

In some embodiments, the microplate may be used for analysis, detection, or measurement of a protein. The one or multiple wells may contain a solution containing a protease. The protease degrades the protein of a target substance to be measured into peptide fragments or amino acids. The peptide fragments or amino acids thus produced may be measured optically and/or with an electrochemical sensor.

In some embodiments, a glycated protein may be measured electrically. Hydrogen peroxide may be generated by the action of a ketoamine oxidase that specifically reacts only with a glycated amino acid or peptide among amino acids or peptides formed by degradation using a protease, and the hydrogen peroxide may be measured with an electrode. Thus, the concentration of the glycated protein in the solution can be determined.

In the following first to fifth embodiments, the configurations of microplates for measuring glycated proteins and steps of using them will be described by way of example.

### <Embodiment 1>

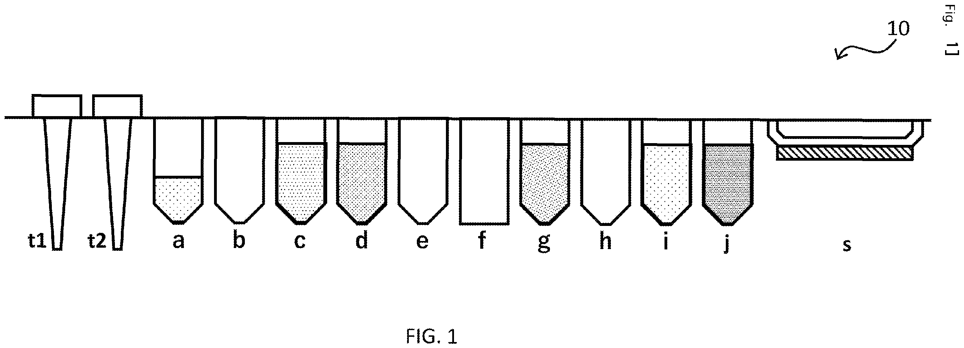

Fig. 1 illustrates a microplate 10 according to an embodiment. The microplate 10 can measure a glycated protein. The concentration of a target protein (total amount of glycated and non-glycated protein) and the concentration of the glycated protein can be measured. The microplate 10 can perform optical measurement and electrical measurement. The microplate 10 includes multiple wells (a to j) and an electrochemical sensor (s) . By way of example but not limitation, optical measurement of albumin concentration in blood and measurement of glycated albumin concentration using an electrochemical sensor will be described with reference to the microplate 10 of the present embodiment.

The microplate 10 illustrated in Fig. 1 includes:
(a) a diluent well containing a diluent;
(b) a filter well fitted with a filter;
(c) a preparation liquid well containing a preparation liquid for optical measurement of a protein;
(d) an indicator solution well containing an indicator solution;
(e) a first stirring well for use in stirring a solution;
(f) an optical measurement well that enables entry of light from the outside and extraction of light to the outside;
(g) a protease solution well containing a protease solution;
(h) a second stirring well for use in stirring a solution;
(i) a sensor cleaning liquid well containing a sensor cleaning liquid;
(j) a sensor calibration liquid well containing a sensor calibration liquid; and
(s) an electrochemical sensor.
Two pipette tips t1 and t2 are attached to the microplate 10. They are used for optical and electrical measurements.

The filter in the filter well (b) has the ability to filter blood and extract plasma or serum. For example, the filter may be a plasma or serum separation filter. The filter well (b) is initially empty and receives the plasma or serum component into which blood has been introduced and passed through the filter. The filter may have the ability to remove dirt, substances that are unwanted or have an adverse effect on the measurement.

The diluent solution in the diluent well (a) is used to dilute the collected blood. The dilution solution is, for example, physiological saline (for example, a phosphate-buffered saline, PBS) .

In some embodiments, the diluent may contain a ketoamine oxidase. Low-molecular-weight peptides are typically present in plasma or serum. To measure the concentration of glycated albumin, originally, only glycated peptide fragments produced by degrading glycated albumin with a protease should be oxidized with ketoamine oxidase, and the concentration of glycated albumin should be measured with hydrogen peroxide generated. However, glycated low-molecular-weight peptides present in blood do not undergo protease degradation and contribute to the generation of hydrogen peroxide. This can cause errors or noise in the measurement results . The addition of ketoamine oxidase to the plasma or serum component before measurement can degrade low-molecular-weight peptides in blood in advance to eliminate or reduce the causes of noise and so forth.

In some embodiments, the diluent may contain catalase. Catalase decomposes hydrogen peroxide. This makes it possible to eliminate or reduce the cause of noise and so forth. In some embodiments, any of the wells, for example, a well other than the diluent well, may contain sodium azide. Sodium azide inhibits the decomposition reaction of hydrogen peroxide by catalase. The addition of sodium azide can control catalase, so that only the glycated peptide fragments generated by the degradation of glycated albumin with protease can be oxidized with ketoamine oxidase to measure only the generated hydrogen peroxide.

The preparation liquid in the preparation liquid well (c) contains an oxidizing agent. Although not limited to this embodiment, in some embodiments, the preparation solution may contain an oxidizing agent. This well may contain another substance. Examples thereof may include buffers, chlorides, surfactants, protein denaturants, pH adjusters, chelating agents/antioxidants (ascorbic acid), and preservatives.

The indicator solution well (d) contains a BCP solution. Although not limited to this embodiment, in some embodiments, the indicator may be BCP or BCG. This well may contain another substance . Examples thereof may include buffers, chlorides, surfactants, protein denaturants, pH adjusters, chelating agents/antioxidants (ascorbic acid), and preservatives.

The first stirring well (e) is initially empty and receives predetermined amounts of preparation liquid, indicator solution, and dilute mixture. The solution in the first stirring well is sufficiently stirred by pipetting.

The optical measurement well (f) is initially empty and receives the mixture for optical measurement. The optical measurement well (f) has one or multiple windows that enables entry of light from the outside and extraction of light to the outside.

The protease solution well (g) contains a protease solution. This well may contain another substance. Examples thereof may include buffers, chlorides, surfactants, pH adjusters, chelating agents/antioxidants (ascorbic acid), preservatives, and mediators.

The second stirring well (h) is initially empty and receives predetermined amounts of protease solution and dilute mixture. The solution in the second stirring well is sufficiently stirred by pipetting. The second stirring well is configured to be externally heated.

The sensor cleaning liquid well (i) contains a cleaning liquid for cleaning the sensor (s). For example, the sensor (s) can be cleaned and prepared for measurement before use.

The sensor calibration liquid well (j) may contain a calibration liquid, for example, a substrate for an enzyme of the enzyme sensor. For example, in order to measure glycated albumin, the calibration liquid may contain fructosyl lysine and glycated peptide fragments.

In some embodiments, the optical measurement well (f) may have an optical measurement window for entry and/or extraction of measurement light (probe). The optical measurement window may be used to allow the measurement light (probe) to enter the mixture for optical measurement and to detect light emerging therefrom. In some embodiments, a single optical measurement window may be provided. In some embodiments, incident light and outgoing light may pass through a single window. In some embodiments, two or more optical measurement windows may be provided. An incident-light window and an outgoing-light window may be provided separately. The incident-light window and the outgoing-light window may be provided at symmetrical positions (surfaces) in the optical measurement well. For example, a light window may be provided on each of one surface and the other surface of the well in the horizontal direction.

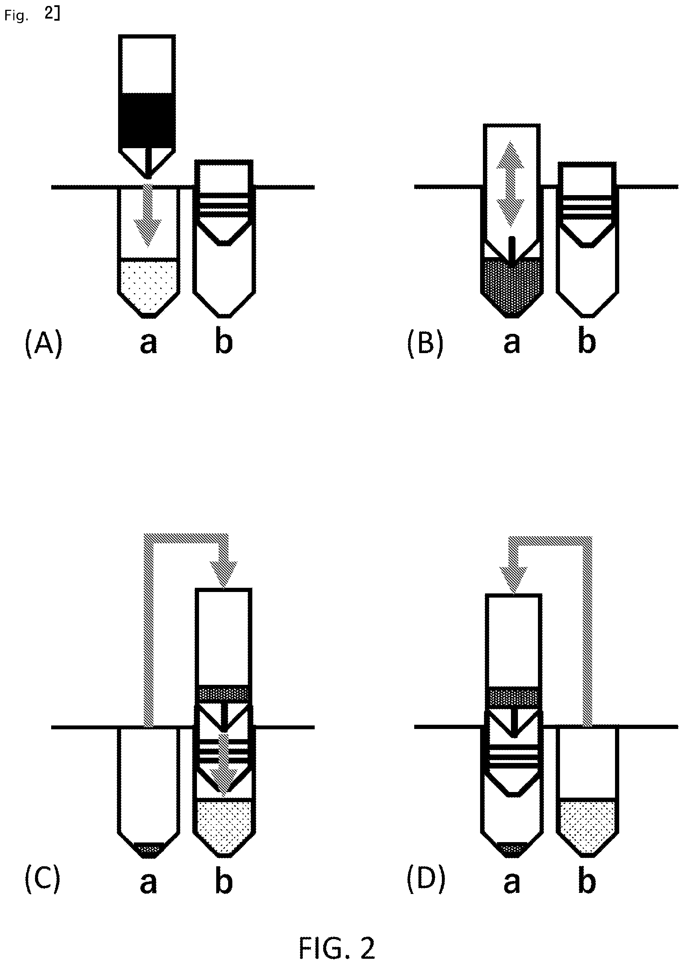

The use of the microplate 10 will be described with reference to Figs. 2 to 4.

### <Pretreatment>

A collected body fluid (for example, blood) is introduced into the diluent well (a) (Fig. 2A). Stirring is performed to prepare a dilute mixture consisting of the amount of body fluid introduced and the diluent (Fig. 2B).

The dilute mixture is taken from the diluent well (a) and passed through the filter of the filter well by pipetting. The filtered dilute mixture is introduced into the filter well (b) (Fig. 2C) . This pipetting may be performed by a body fluid introduction device.

The filter is removed from the filter well (b). In Fig. 2, the filter is transferred to the diluent well (a). This enables the pipette to access the filtered dilute mixture in the filter well (b) (Fig. 2D).

### <Optical Measurement>

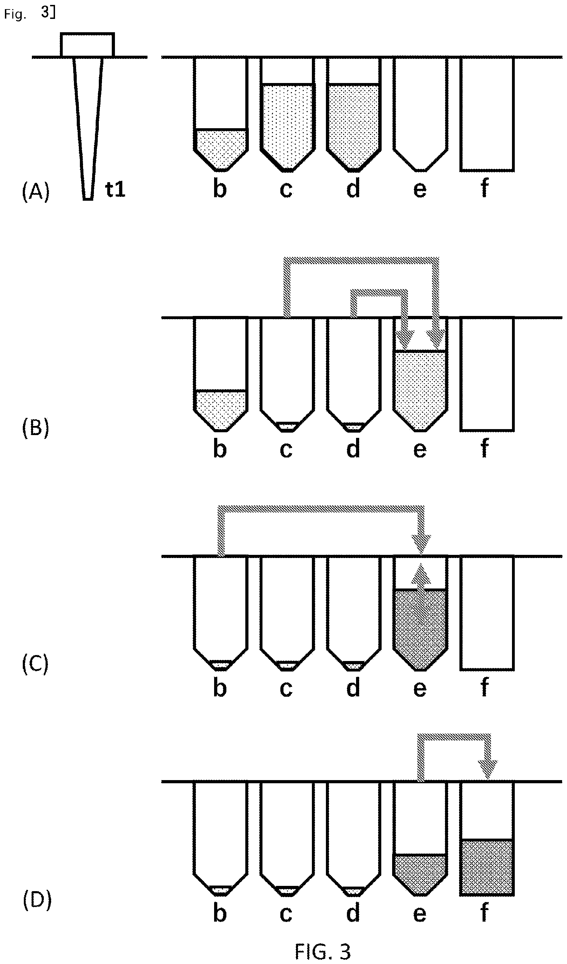

One pipette tip t1 is used for handling solutions for optical measurement (Fig. 3A). In Figs. 3B to D, the pipette tip t1 is used, but is not illustrated in the drawings.

A predetermined amount of preparation liquid (for example, an oxidizing agent) is taken from the preparation liquid well (c) and introduced into the first stirring well (e) by pipetting. Then a predetermined amount of indicator solution (for example, BCP) is taken from the indicator solution well (d) and introduced into the first stirring well (e) by pipetting. Thereby, an indicator mixture containing the preparation liquid and the indicator is prepared (Fig. 3B).

A predetermined amount of filtered dilute mixture is taken from the filter well (b) and introduced into the first stirring well (e) by pipetting. After the introduction, the solution in the first stirring well (e) is stirred. Thereby, a mixture for optical measurement is prepared (Fig. 3C).

A predetermined amount of mixture for optical measurement is taken from the first stirring well (e) and introduced into the optical measurement well (f) by pipetting. The optical properties of the mixture for optical measurement in the optical measurement well (f) are measured (Fig. 3D).

The optical measurement well (f) is configured to allow sufficient introduction of probe light and sufficient output of measurement light. Based on the optical properties of the mixture for optical measurement, the amount (for example, concentration) of target substance (for example, a protein) in the original solution can be determined.

The steps illustrated in Figs. 3C and 3D can be replaced by another method. For example, the indicator mixture may be first introduced into the optical measurement well (f) to measure the optical properties, and then the filtered dilute mixture may be introduced into the optical measurement well (f) to measure the optical properties. In this case, the amount of target substance can be obtained from the difference in optical properties before and after the introduction of the measurement sample.

### <Electrical Measurement>

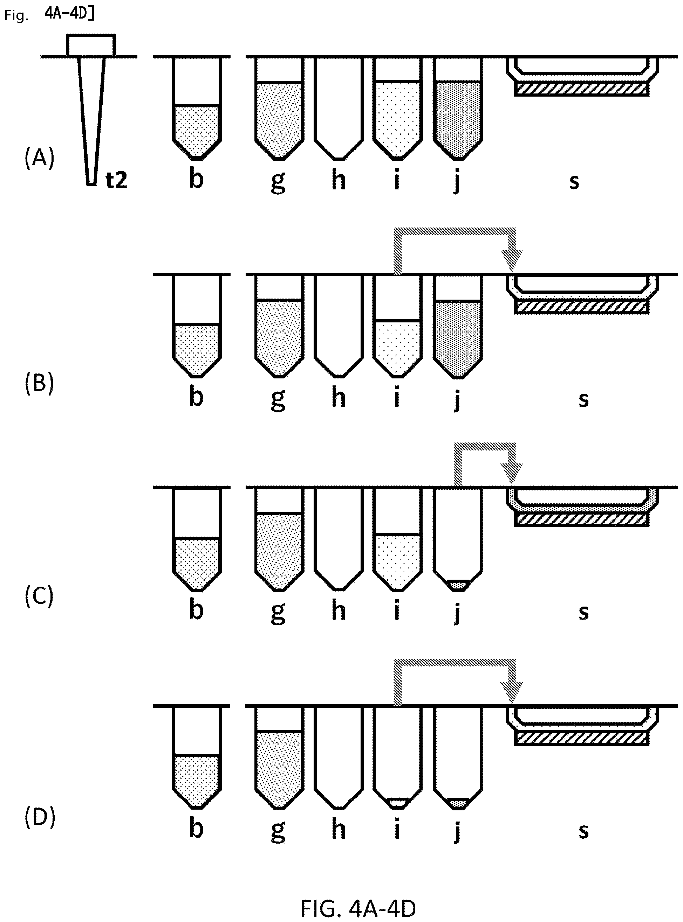

The other pipette tip t2 is used to handle solutions for electrical measurement (Fig. 4A). In Figs. 4B to G, the pipette tip t2 is used, but is not illustrated in the drawings.

A predetermined amount of sensor cleaning liquid is taken from the sensor cleaning liquid well (i) by pipetting, and then the sensor (s) is cleaned (Fig. 4B).

The sensor calibration liquid is taken from the sensor calibration liquid well (j) and introduced into the sensor (s) by pipetting (Fig. 4C). The sensor calibration liquid is used to calibrate the sensor.

By pipetting, a predetermined amount of sensor cleaning liquid is taken from the sensor cleaning liquid well (i), the sensor (s) is cleaned, and the calibration liquid is removed from the sensor (s) (Fig. 4D). In some embodiments, the calibration liquid need not be cleaned after calibration. The measurement liquid may be introduced into the sensor (s) in which the calibration liquid is present, and the measurement may be started.

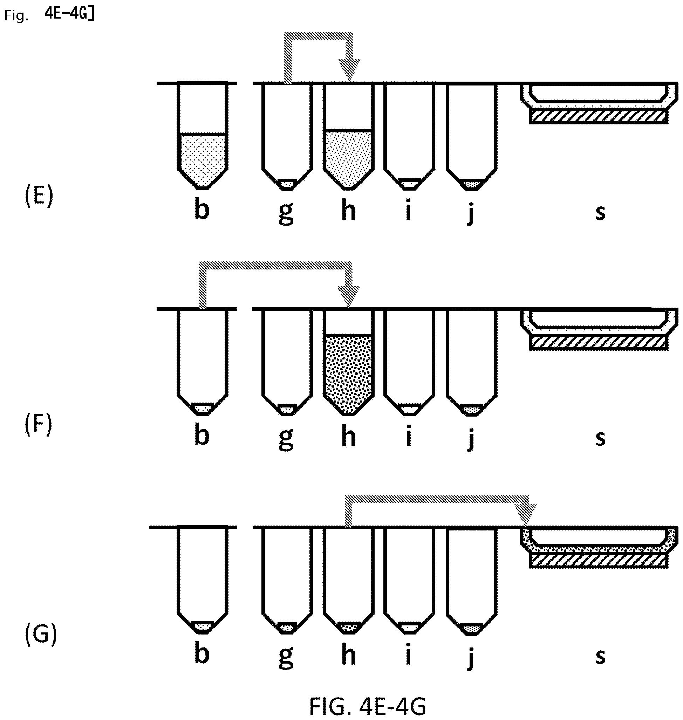

A predetermined amount of protease solution is taken from the protease solution well (g) and introduced into the second stirring well (h) by pipetting (Fig. 4E).

A predetermined amount of filtered dilute mixture is taken from the filter well (b) and introduced into the second stirring well (h) by pipetting. After the introduction, the solution in the second stirring well (h) is stirred. Thereby, a protease mixture is prepared (Fig. 4F). The dilute mixture introduced into the second stirring well (h) may be heated. The second stirring well (h) may be heated before the dilute mixture is introduced. The second stirring well (h) may be heated after the dilute mixture is introduced. The protease mixture may be heated, for example, to the optimum temperature of the protease.

A predetermined amount of protease mixture is taken from the second stirring well (h) and introduced into the sensor (s) by pipetting (Fig. 4G). The sensor (s) performs electrical measurement on the protease mixture. The sensor (s) may measure a temporal change in output based on the time of the start of mixing of the protease solution with the dilute mixture.

For example, the amount of target glycated protein can be determined on the basis of the measurement by the sensor (s).

For example, the degree of glycation of the protein can be determined from the amount of protein determined by the optical measurement in the optical measurement well (f) and the amount of glycated protein determined by the sensor (s).

### <Embodiment 2>

In some embodiments, a microplate may include at least:
(a2) a diluent well containing a diluent;
(d2) an indicator solution well containing an indicator solution and a preparation liquid for optical measurement;
(e2) a first stirring well for use in stirring a solution;
(f2) an optical measurement well having an optical measurement window;
(g2) a protease solution well containing a protease solution;
(h2) a second stirring well for use in stirring a solution;
(s2) an electrochemical sensor.

That is, a microplate may include at least six wells and one sensor. The microplate may be provided with two stirring wells.

The collected body fluid (for example, blood) is subjected to plasma separation in advance. A sample containing a plasma component is introduced into the diluent well (a2). Thereby, the sample is mixed with the diluent. For mixing, the solution may be stirred.

A predetermined amount of indicator mixture is taken from the indicator solution well (d2) and introduced into the first stirring well (e2) by pipetting.

A predetermined amount of dilute mixture is taken from the diluent well (a2) and introduced into the first stirring well (e2) by pipetting. After the introduction, the solution in the first stirring well (e2) is stirred. Thereby, a mixture for optical measurement is prepared.

A predetermined amount of mixture for optical measurement is taken from the first stirring well (e2) and introduced into the optical measurement well (f2) by pipetting. The optical properties of the mixture for optical measurement in the optical measurement well (f2) are measured.

A predetermined amount of protease solution is taken from the protease solution well (g2) and introduced into the second stirring well (h2) by pipetting.

A predetermined amount of dilute mixture is taken from the diluent well (a2) and introduced into the second stirring well (h2) by pipetting. After the introduction, the solution in the second stirring well (h2) is stirred. Thereby, a protease mixture is prepared.

A predetermined amount of protease mixture is taken from the second stirring (h2) and introduced into the sensor (s2) by pipetting. The sensor (s2) performs electrochemical measurement on the protease mixture.

In some embodiments, the dilute mixture may be prepared in a diluent well (for example, a) . In this case, the filter well (for example, b) is not needed. In some embodiments, the preparation liquid for the optical measurement of a protein may already be mixed with the indicator solution in the indicator solution well (for example, d) . In this case, the preparation liquid well (for example, c) is not needed. In some embodiments, a calibration liquid well (for example, j) is not needed. In some embodiments, the sensor (s) does not require measurement preparation, for example, with a sensor cleaning liquid. In that case, the sensor cleaning liquid well (for example, i) is not needed.

### <Embodiment 3>

In some embodiments, the microplate includes at least:
(a3) a diluent well containing a diluent;
(d3) an indicator solution well containing an indicator solution for a protein;
(f3) an optical measurement well having an optical measurement window;
(g3) a protease solution well containing a protease solution; and
(j3) an electrochemical sensor.

That is, the microplate may include at least four wells and one sensor. The microplate need not separately include a stirring well.

The collected body fluid (for example, blood) is subjected to plasma separation in advance. A sample containing a plasma component is introduced into the diluent well (a3). Thereby, the sample is mixed with the diluent. For mixing, the solution may be stirred.

A predetermined amount of dilute mixture is taken from the diluent well (a3) and introduced into the indicator solution well (d3) by pipetting. After the introduction, the solution in the indicator solution well (d3) is stirred. Thereby, a mixture for optical measurement is prepared.

A predetermined amount of mixture for optical measurement is taken from the indicator solution well (d3) and is introduced into the optical measurement well (f3) by pipetting. The optical properties of the mixture for optical measurement in the optical measurement well (f3) are measured.

In another embodiment, by pipetting, a predetermined amount of dilute mixture is taken from the diluent well (a3) and introduced into the optical measurement well (f3), and a predetermined amount of indicator mixed solution is taken from the indicator solution well (d3) and introduced into the optical measurement well (f3). They are mixed in the optical measurement well (f3), and the optical properties of the mixture for optical measurement in the optical measurement well (f3) are measured.

A predetermined amount of dilute mixture is taken from the diluent well (a3) and introduced into the protease solution well (g3) by pipetting. After the introduction, the solution in the protease solution well (g3) is stirred. Thereby, a protease mixture is prepared. The protease solution well (g3) may be heated.

A predetermined amount of protease mixture is taken from the protease solution well (g3) and introduced into the sensor (s3) by pipetting. The sensor (s3) performs electrochemical measurement on the protease mixture.

In some embodiments, the indicator solution well may contain a measured amount of indicator solution for a protein. In some embodiments, the dilute mixture may be stirred or mixed with the indicator solution for a protein in the indicator solution well. In some embodiments, the dilute mixture may be stirred or mixed with the protease solution in the protease solution well.

### <Embodiment 4>

In some embodiments, the microplate includes at least:
(a4) a diluent well containing a diluent;
(f4) an optical measurement well containing an indicator solution for a protein and having an optical measurement window;
(g4) a protease solution well containing a protease solution;
(s4) an electrochemical sensor.

That is, the microplate may include at least three wells and one sensor. The optical measurement well may contain a predetermined amount of indicator solution for a protein. In the optical measurement well, the solution may be mixed and stirred, and the solution may be measured.

The collected body fluid (for example, blood) is subjected to plasma separation in advance. A sample containing a plasma component is introduced into the diluent well (a4). Thereby, the sample is mixed with the diluent. For mixing, the solution may be stirred.

A predetermined amount of dilute mixture is taken from the diluent well (a4) and introduced into the optical measurement well (f4) by pipetting. After the introduction, the solution in the optical measurement well (f4) is stirred. Thereby, a mixture for optical measurement is prepared. The optical properties of the mixture for optical measurement in the optical measurement well (f4) are measured.

A predetermined amount of dilute mixture is taken from the diluent well (a4) and introduced into the protease solution well (g4) by pipetting. After the introduction, the solution in the protease solution well (g4) is stirred. Thereby, a protease mixture is prepared. The protease solution well (g4) may be heated.

A predetermined amount of protease mixture is taken from the protease solution well (g4) and introduced into the sensor (s4) by pipetting. The sensor (s4) performs electrochemical measurement on the protease mixture.

In some embodiments, the dilute mixture may be stirred in the optical measurement well or mixed with a mixture containing an indicator solution for a protein and a preparation liquid for optical measurement. In some embodiments, the dilute mixture may be stirred or mixed with the protease solution in the protease solution well.

### <Embodiment 5>

In some embodiments, the microplate includes at least:
(a5) a diluent well containing a diluent;
(f5) an optical measurement well containing a solution containing an indicator for a protein and a protease solution and having an optical measurement window; and
(s5) an electrochemical sensor.

That is, the microplate may include at least two wells and one sensor. The optical measurement well may contain a measured amount of solution containing the indicator for a protein and a protease. Optical measurement may be performed in the optical measurement well, and the same solution may be introduced to the sensor. In some embodiments, a target protein may be degraded by the protease even in the presence of the indicator for optical measurement. In some embodiments, the sensor may contain an indicator and may be capable of measuring a peptide degraded by the protease.

The collected body fluid (for example, blood) is subjected to plasma separation in advance. A sample containing a plasma component is introduced into the diluent well (a5). Thereby, the sample is mixed with the diluent. For mixing, the solution may be stirred.

A predetermined amount of dilute mixture is taken from the diluent well (a5) and introduced into the optical measurement well (f5) by pipetting. After the introduction, the solution in the optical measurement well (f5) is stirred. Thereby, a protease-containing mixture for optical measurement is prepared. The optical properties of the mixture for optical measurement in the optical measurement well (f5) are measured. The optical measurement well (f5) may be heated.

A predetermined amount of protease-containing mixture for optical measurement is taken from the optical measurement well (f5) and introduced into the sensor (s5) by pipetting. The sensor (s5) performs electrochemical measurement on the protease mixture.

In some embodiments, the indicator solution well may further contain a preparation liquid for optical measurement. For example, the indicator solution well (d2, d3, or the like) may contain the indicator for a protein and the preparation liquid for optical measurement. For example, the optical measurement well (for example, f4) may contain the indicator for a protein and the preparation liquid for optical measurement. For example, the optical measurement well (for example, f5) may contain the indicator for a protein, the preparation liquid for optical measurement, and the protease.

In the embodiments 1 to 4, in order to measure the glycated protein, the indicator is used for the optical measurement, and the enzyme is used for the electrochemical measurement. However, this is merely an example, and the present disclosure is not limited thereto. The solution used in the wells may be other solutions. In the embodiments 1 to 4, for example, the measurement targets, the solutions, the number of wells, the well names, and the steps, can be appropriately changed in accordance with applications.

In some embodiments, control measurement may be taken before, during, or after the main measurement. For example, a standard solution having a known concentration may be introduced to perform the process as described above or with necessary modifications.

### <Waste Liquid Tank>

In some embodiments, the microplate may further include a waste liquid tank. In some embodiments, the waste liquid tank may be configured to receive a solution discharged from the sensor. In some embodiments, the sensor may include a waste liquid tank. In this case, for example, the liquid used in the microplate can be discarded together with the cartridge. This can, for example, improve the safety of handling the solution or reduce the risk of infection.

### <Cover>

In some embodiments, the microplate may include a cover. The microplate may be configured to be coupled with a cover. The cover can substantially prevent the solution in the well remaining after use from leaking or spilling. This can, for example, improve the safety of handling the solution or reduce the risk of infection.

The use of the microplate or the method of the present disclosure, for example, without limitation, enables relatively accurate or small error measurements to be performed for trace amounts of the target substance. For example, the coefficient of variation (CV) can be equal to or less than 5%, 4%, 3%, 2%, or 1%. For example, GA value measurement based on the glycated albumin concentration can be performed at a CV value of 5% to 8% or less. For example, without limitation, when multiple measurements (optical measurement and one or more sensor measurements) are performed, the multiple measurements can be performed in parallel, i.e., the measurements may be performed efficiently.

### <Example 1: Microplate>

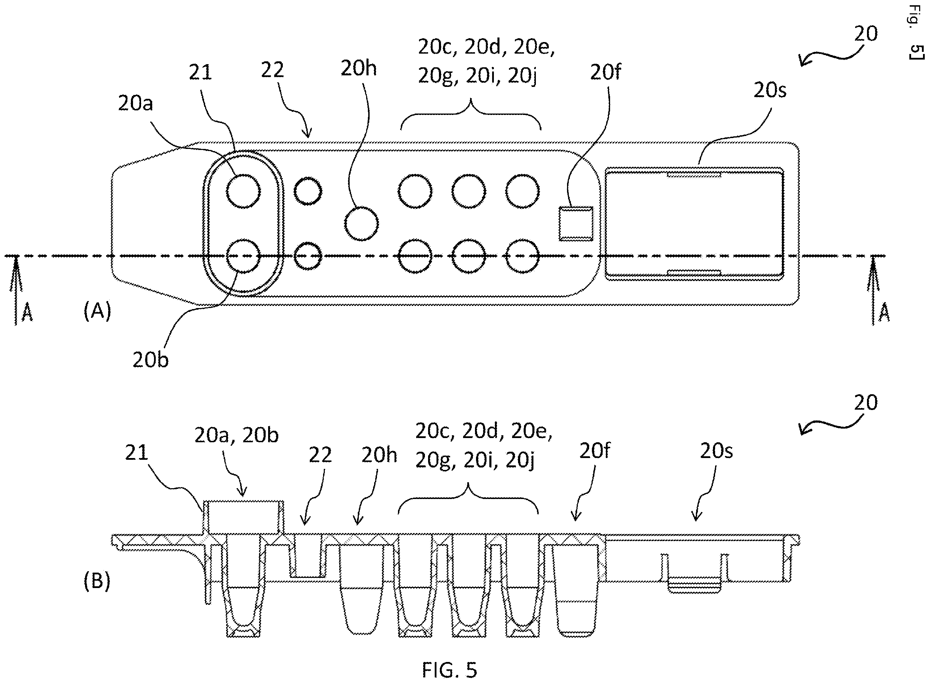

Fig. 5 illustrates a top view (Fig. 5A) of a microplate 20 according to an example and a cross-sectional view (Fig. 5B) taken along line A-A in Fig. 5A. The microplate 20 includes wells 20a to 20j arranged in the longitudinal direction and a sensor attachment portion 20s. A second stirring well 20h, an optical measurement well 20f, and the sensor attachment portion 20s are arranged on the center line. The wells and positions are arranged in two longitudinal rows symmetrically about the center line. The wells or structures arranged will be described below in order from the left side of the drawing.

First, the filter well 20a and the diluent well 20b are arranged. A wall is disposed around the openings of these wells. This wall 21 can receive and stably hold a filter and a used blood collection device.

Next, open pipette tip holders 22 are arranged. These need not be wells, but may be, for example, through-holes.

The second stirring well 20h is arranged next to it. The second stirring well 20h is disposed alone instead of in two rows. A lower or lateral space is reserved so that a heater (not illustrated) can be brought closer. For example, the heater may have an inwardly curved surface that comes into contact with the outer shape of the second stirring well 20h. This allows the heater to come into contact with the second stirring well 20h over a relatively large area. For example, the heater may be configured to approach the second stirring well 20h from below. The heater can control the temperature of a solution in the second stirring well 20h to optimize the reaction of a reagent.

Next, six wells are arranged in two rows. In some embodiments, they are used as a preparation liquid well 20c, an indicator solution well 20d, a first stirring well 20e, a protease solution well 20g, a sensor cleaning liquid well 20i, and a sensor calibration liquid well 20j.

Next to that, an optical measurement well 20f is disposed. The optical measurement well 20f is disposed alone instead of in two rows. This enables probe light to pass through the optical measurement well 20f in a horizontal direction perpendicular to the longitudinal direction.

A sensor attachment portion 20s to which a sensor (not illustrated) is to be attached is disposed on the rightmost side in the drawing. The sensor is manufactured separately and attached to the portion.

### <Example 2: Sensor>

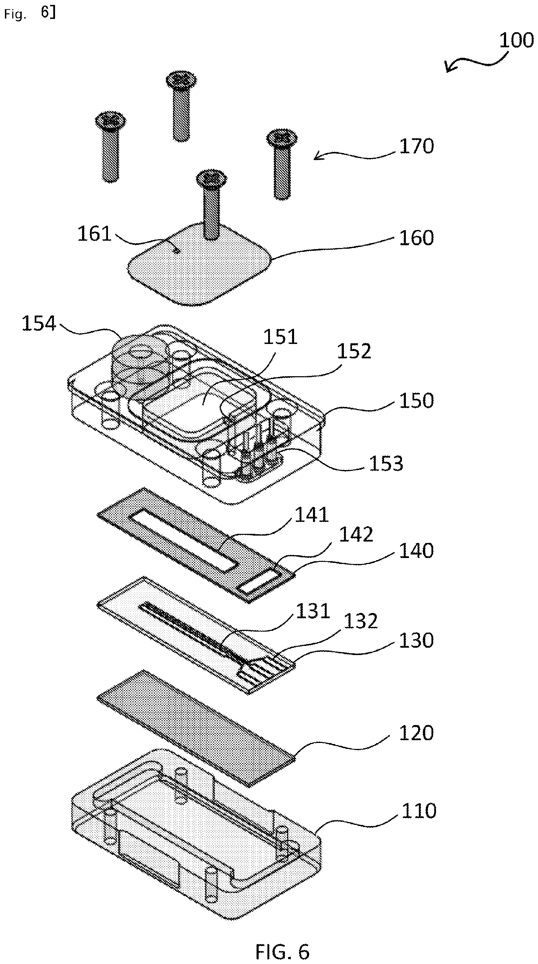

Fig. 6 is an exploded perspective view of a sensor 100 according to an example. The sensor 100 includes a lower body 110, a sensor substrate support 120, a sensor substrate 130, a flow channel spacer 140, an upper body 150, an upper sealing 160, and fixing screws 170.

The lower body 110 has a recessed portion in which the sensor substrate support 120 is placed. The sensor substrate 130 is usually composed of glass or silicon and thus is relatively brittle. To avoid mechanical damage due to assembly or pressing, the sensor substrate support 120 may be composed of a relatively soft material, such as resin.

The sensor substrate 130 is placed thereon. The sensor substrate 130 includes, on its surface, sensing electrodes 131 and sensing electrode terminals 132 electrically connected to the sensing electrodes 131. The sensing electrodes 131 recognize a chemical reaction that occurs at or near their surfaces and produce a current or voltage corresponding thereto. The electrical signal is transmitted to the outside through the sensing electrode terminals 132.

The flow channel spacer 140 is placed on the sensor substrate 130. The flow channel spacer 140 has a flow channel through-hole 141. The flow channel spacer 140 is in close contact with the sensing substrate 130 so as to surround the sensing electrodes 131 at a lower surface around the flow channel through-hole 141, and is in close contact with the upper body 150 at an upper surface thereof. Accordingly, the flow channel through-hole 141 substantially determines the shape of a sensing flow channel by its width, thickness, and length. The flow channel spacer 140 further includes a terminal through-hole 142 that ensures access to the sensing electrode terminals 132.

The upper body 150 is placed thereon. The upper body 150 is mechanically fixed to the lower body 110 by the fixing screws 170. As a result, the sensor substrate support 120, the sensor substrate 130, and the flow channel spacer 140 are in close contact with each other therebetween. The flow channel is formed as a fluidly sealed structure, except for the inlet and the outlet.

The upper body 150 includes a waste liquid tank 151. The upper sealing 160 is attached to the upper body 150 so as to block the opening of the waste liquid tank. The upper sealing 160 has an air hole 161.

The upper body 150 has an inlet 154 for introducing a solution to be measured. The inlet 154 may have, for example, a structure to which a pipette is easily attached. The solution introduced from the inlet 154 flows in the flow channel defined by the flow channel through-hole 141. The solution passes through the surface of the sensing electrode 131, where the measurement is made.

The upper body 150 has electrode terminals 153. By the assembly, the lower ends of the electrode terminals 153 can pass through the terminal through-hole 142 of the flow channel spacer 140 and can come into directly contact with the sensor electrode terminals 132 of the sensor substrate 130. The upper ends of the electrode terminals 153 can be coupled to an external electric circuit. In this way, the electrical signal obtained by the sensor electrodes 131 can be transmitted to the outside of the sensor 100.

The solution flows upward through a waste liquid guide 152 disposed vertically in the upper body 150 from a side opposite to the solution inlet 154 of the flow channel 141 and flows into the waste liquid tank 151 from the upper end thereof. As the solution flows into the waste liquid tank 151, the air therein is discharged to the outside through the air hole 161.

The waste liquid stored in the waste liquid tank 151 does not flow out from the air hole 161 in normal use. Thus, the waste liquid can be discarded together with the sensor 100 or the microplate (cartridge) while stored in the waste liquid tank 151.

### <Example 3: Sensor>

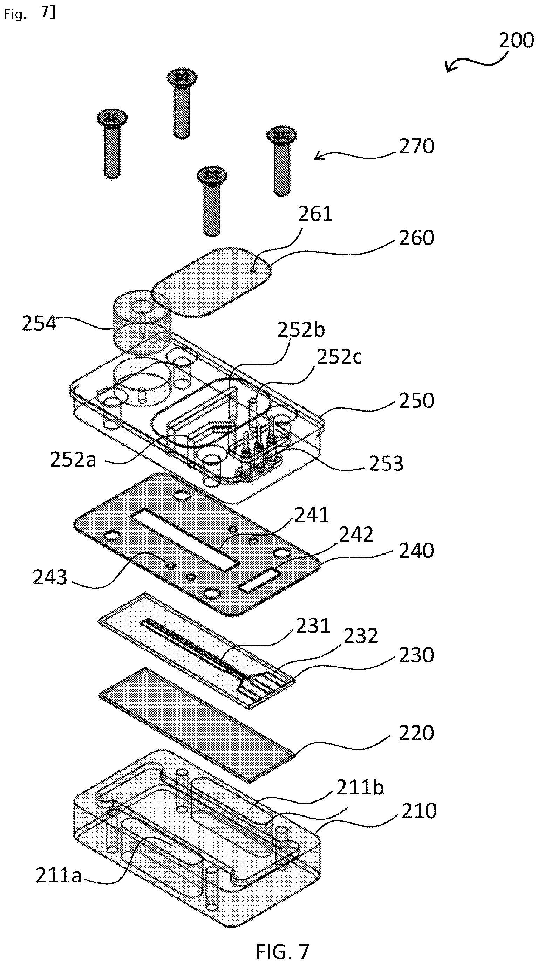

Fig. 7 is an exploded perspective view of a sensor 200 according to an example. The sensor 200 includes a lower body 210, a sensor substrate support 220, a sensor substrate 230, a flow channel spacer 240, an upper body 250, an upper sealing 260, and fixing screws 270.

The lower body 210 has a recessed portion in which the sensor substrate support 220 is placed. The sensor substrate support 220 may be composed of a relatively soft material, such as resin. The lower body 210 further includes waste liquid tanks 211a and 211b.

The sensor substrate 230 is placed thereon. The sensor substrate 230 includes, on its surface, sensing electrodes 231 and sensing electrode terminals 232 electrically connected to the sensing electrodes 231. The sensing electrodes 231 recognize a chemical reaction that occurs at or near their surfaces and produce a current or voltage corresponding thereto. The electrical signal is transmitted to the outside through the sensing electrode terminals 232.

The flow channel spacer 240 is placed on the sensor substrate 230. The flow channel spacer 240 has a flow channel through-hole 241. The flow channel spacer 240 is in close contact with the sensing substrate 230 so as to surround the sensing electrodes 231 at a lower surface around the flow channel through-hole 241, and is in close contact with the upper body 250 at an upper surface thereof. Accordingly, the flow channel through-hole 241 substantially determines the shape of a sensing flow channel by its width, thickness, and length. The flow channel spacer 240 further includes a terminal through-hole 242 that ensures access to the sensing electrode terminals 232. The flow channel spacer 240 further includes waste liquid through-holes 243 that enable a solution to flow between the lower body 210 and the upper body 250.

The upper body 250 is placed thereon. The upper body 250 is mechanically fixed to the lower body 210 by the fixing screws 270. As a result, the sensor substrate support 220, the sensor substrate 230, and the flow channel spacer 240 are in close contact with each other therebetween. The flow channel is formed as a fluidly sealed structure, except for the inlet and the outlet.

The upper body 250 has an inlet 254 for introducing a solution to be measured. The solution introduced from the inlet 254 flows in the flow channel defined by the flow channel through-hole 241. The solution passes through the surface of the sensing electrode 231, where the measurement is made.

The upper body 250 has electrode terminals 253. By the assembly, the lower ends of the electrode terminals 253 can pass through the terminal through-hole 242 of the flow channel spacer 240 and can come into directly contact with the sensor electrode terminals 232 of the sensor substrate 230. The upper ends of the electrode terminals 253 can be coupled to an external electric circuit. In this way, an electric signal obtained by the sensor electrodes 231 can be transmitted to the outside of the sensor 200.

The solution flows upward and downward through a first waste liquid guide 252a vertically disposed in the upper body 250 from a side of the channel 241 opposite to the solution inlet 254, passes through one of the waste liquid through-holes 243 of the flow channel spacer 240, and enters a first waste liquid tank 211a of the lower body 210.

After the first waste liquid tank 211a is full, the supply of the waste liquid from the flow channel continues, in some cases. In such a case, the waste liquid flows from the first waste liquid tank 211a, through one of the waste liquid through-holes 243 of the flow channel spacer 240, flows upward through a second waste liquid guide 252b, flows over the flow channel, and flows to a second waste liquid tank 211b of the lower body 210 disposed on the opposite side.

The upper sealing 260 is fixed to the top of the upper body 250. The upper flow channels of the waste liquid guides 252a and 252b have open structures. The upper sealing 260 closes them and seals the waste liquid guide 252a and 252b.

The upper sealing 260 has an air hole 261. The air inside the first waste liquid tank 211a and the second waste liquid tank 211 passes through the other waste through-holes of the flow channel spacer 240, passes through an air guide 252c of the upper body 250, and is finally discharged to the outside from the air hole 261 of the upper sealing 260.

The waste liquid stored in the waste liquid tanks 211a and 211b do not flow out from the air hole 261 in normal use. Thus, the waste liquid can be discarded together with the sensor 200 or the microplate (cartridge) while stored in the waste liquid tanks 211a and 211b.

In some embodiments, a well that contains a solution in advance may be closed by a seal. The seal may be peeled off prior to use. The movement of the pipette tip may allow its tip to penetrate the seal.

The electrodes of the sensors of Examples 2 and 3 may be hydrogen peroxide electrodes, oxygen electrodes, or other electrodes, or combinations thereof.

### <Example 4: Automated Measurement System>

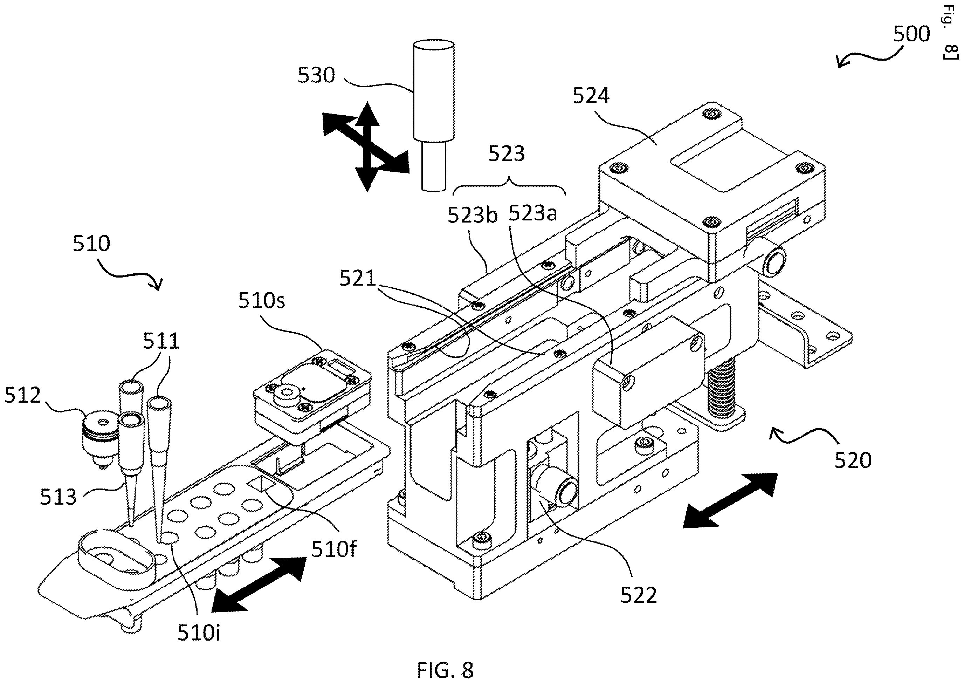

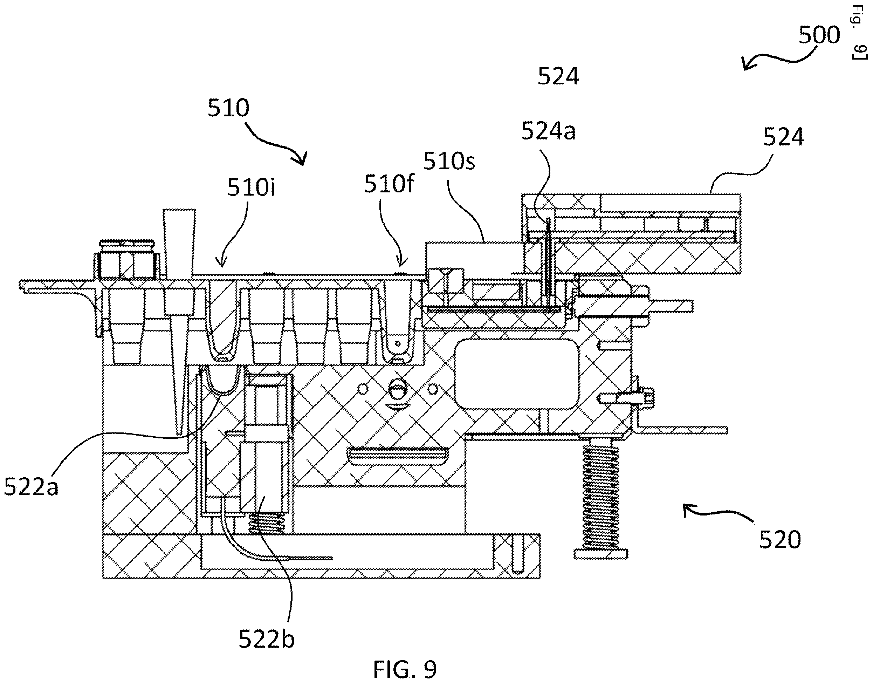

Figs. 8 and 9 are a perspective view and a cross-sectional view, respectively, illustrating a configuration of an automated measurement system 500 including a microplate 510, a measurement body 520, and a pipette 530 according to an example.

The microplate 510 extends in the longitudinal direction and includes a sensor 510s fitted at one end thereof. Pipette tips 511 and a filter 512 may be disposed on the microplate 510 in advance. A blood collection tube 513 is schematically illustrated.

The measurement body 520 includes linear rails (or guides) 521 configured to receive the microplate 510 inserted by sliding in the longitudinal direction (X) direction).

The measurement body 520 includes a heater system 522. The heater system 522 includes a heater 522a configured to come into contact with or approach the bottom and side of a heating well (for example, a second stirring well) 510i of the microplate 510 and heat it, and a heater moving mechanism 522b that can vertically move the heater 522a. The heater system 522 may be coupled to a power supply (not illustrated).

The measurement body 520 includes an optical measurement device 523 including a light-emitting element 523a and a light-receiving element 523b. An optical path from the light-emitting element 523a to the light-receiving element 523b is defined in a direction perpendicular to the longitudinal direction of the microplate 510 or the rails 521 and passes through the optical measurement well 510f of the microplate 510. Thereby, the optical properties in the optical measurement well 510f can be measured.

The measurement body 520 includes an electrical measurement system 524. The electrical measurement system 524 includes probe terminals 524a that can be lowered to come into contact with electrode terminals (not illustrated) of the sensor 510s. The electrical signal output from the sensor 510s is received by the electrical measurement system 524, analyzed, and/or further transmitted to the outside. The electrical measurement system 524 may be electromagnetically coupled to an external computing unit in a wireless or wired manner.

The pipette 530 is configured to move in the vertical direction (Z direction) relative to the measurement body 520 or the microplate 510 fixed thereto and in the direction (Y direction) perpendicular to the longitudinal direction in the horizontal plane. The pipette 530 is coupled to or provided with a movement mechanism (pipette moving mechanism, not illustrated) that enables such movement.

The measurement body 520 is configured to move in the longitudinal direction (X direction) of the microplate 510 relative to the pipette 530 in a horizontal plane. The measurement body 520 is coupled to a moving mechanism (measurement body moving mechanism, not illustrated) that enables such movement.

These moving mechanisms can control the proper pipetting motion of the pipette 530 with respect to the microplate 510.

In some embodiments, the moving mechanisms, the heater system 522, and the electrical measurement system 524 may each, some, or all together be coupled to a control system (not illustrated).

In some embodiments, the automated measurement system may further include a computer or computer system and may be calibrated to be connectable thereto. Various steps in the method of the present disclosure may be controlled by a computer from or after the attachment of the microplate to the system body. The computer may include a central processing unit (CPU) and a storage medium that stores a program for controlling them.

### <Calibration>

In some embodiments, the sensor may be calibrated before, during, after, or multiple time points during the measurement. A predetermined calibration liquid may be used for configuration. In some embodiments, the sensor may be pre-calibrated at the time of shipment or manufacture. The sensor may have a reading code, such as a barcode, a QR code (registered trademark), a character code, or an image code. The code may be attached or formed by printing on a surface of the sensor body. The code may be a magnetic code. The cord may be attached inside the sensor. The code may be associated with sensor information, such as manufacturing information, shipping information, or calibration information. The user or the system can acquire the related information by reading the code. The code may be read to obtain a calibration line for the sensor.

In some embodiments, the microplate may include multiple sensors. In some embodiments, the microplate may include multiple sub-microplates coupled together. In some embodiments, one well group and one sensor may be provided for one specimen. In some embodiments, multiple well groups and one sensor may be provided for one specimen. In some embodiments, one well group and multiple sensors may be provided for one specimen. In some embodiments, multiple well groups and multiple sensors may be provided for one specimen.

### <Example 5: Multichannel Microplate>

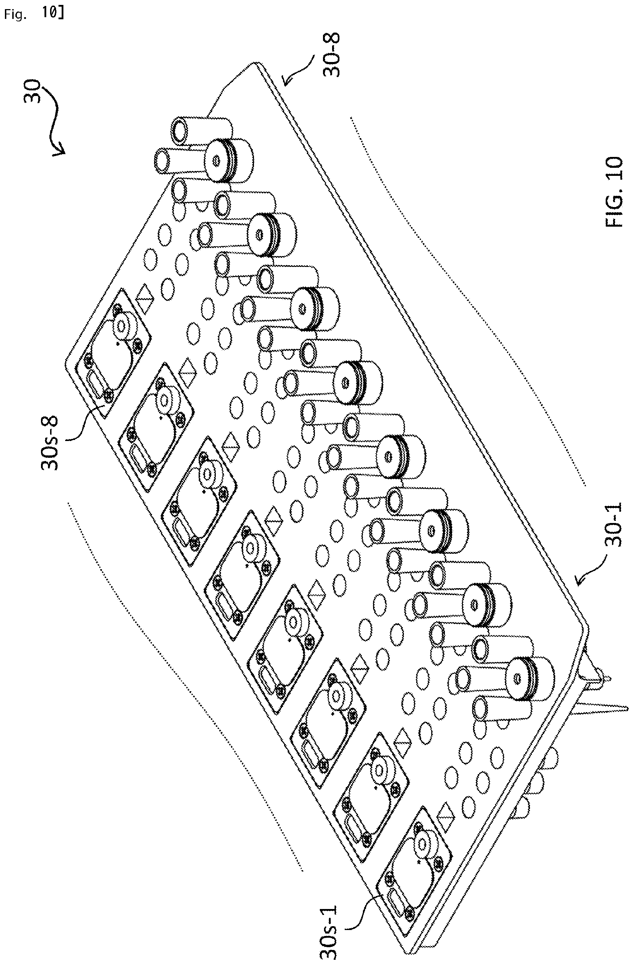

Fig. 10 is a perspective view of a microplate 30 according to an example. The microplate 30 includes, for example, eight rows of sub-microplates 30-1 to 30-8. In some embodiments, each sub-microplate may be a microplate as described in the examples or embodiments above. The sub-microplates 30-1 to 30-8 of Fig. 10 include sensors 30s-1 to 30s-n, respectively. This enables the measurements to be performed in parallel. Measurement can be performed efficiently or at high throughput.

### <Example 6: Single-Row Microplate>

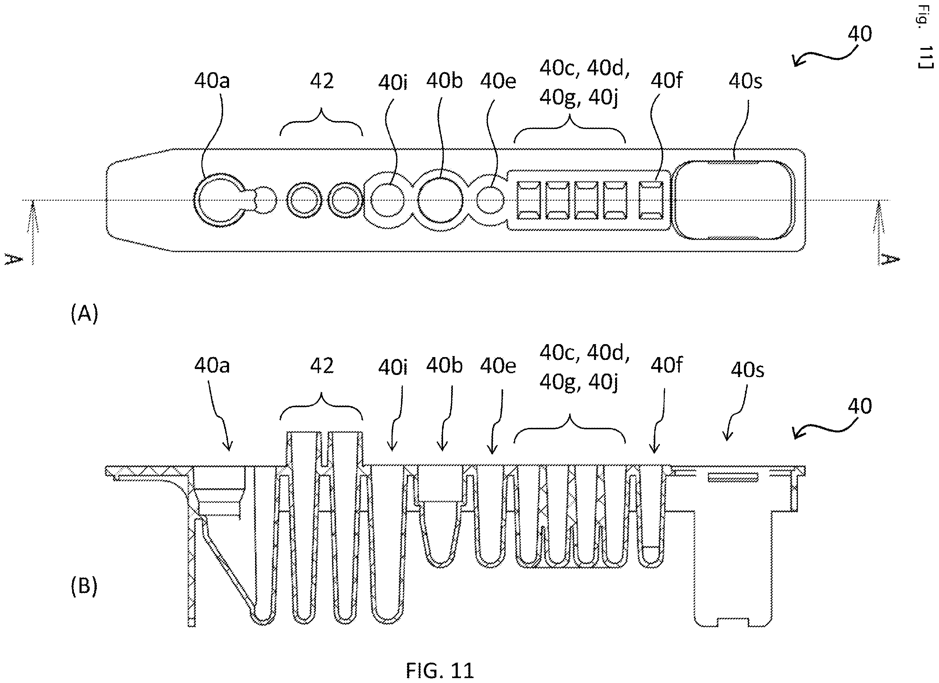

Fig. 11 illustrates a top view (Fig. 11A) of a microplate 40 according to an example and a cross-sectional view (Fig. 11B) taken along line A-A in Fig. 11A. The microplate 40 includes wells 40a to 40j arranged in the longitudinal direction and a sensor attachment portion 40s. One difference from the microplate 20 of Example 1 illustrated in Fig. 5 is as described below. That is, in the microplate 20 of Example 1 illustrated in Fig. 5, some of the wells are arranged in two rows in the longitudinal direction symmetrically about the center line. In contrast, in the microplate 40 illustrated in Fig. 11, all the wells are arranged in a row on the center line in the longitudinal direction. The wells or structures arranged will be described below in order from the left side of the drawing.

First, a filter well 40a is disposed. A filter (not illustrated) is press-fitted into the filter well 40a. As illustrated in Fig. 11B, the bottom has a partial bevel, which allows a filtered solution (or dilute mixture) to efficiently collect at the deepest point.

Next, pipette tip holders 42 are arranged. Each of the pipette tip holders 42 has a wall disposed in its opening portion. Thus, a pipette tip or the like can be stably held so as not to be displaced. In some embodiments, each pipette tip holder may have a closed bottom, as illustrated in Fig. 11B. This allows any dripping that may occur during and after use to be retained in the cartridge, keeping the device clean and uncontaminated.

A sensor cleaning liquid well 40i and a diluent well 40b are arranged next to them.

Next, a first stirring well 40e is disposed. A measurement system includes a heater that approaches a pipette cartridge 40 from below, surrounds the first stirring well 40e, and heats it. The internal temperature can be controlled to suit predetermined mixing or stirring.

A protease solution well 40g, a sensor calibration liquid well 40j, a preparation liquid well 40c, and an indicator solution well 40d are arranged in a row.

Next to that, an optical measurement well 40f is disposed. The optical measurement well 40f is configured to allow probe light to pass through the optical measurement well 40f in a direction perpendicular to the longitudinal direction and in the horizontal direction.

The measurement system includes a heater (with a recessed surface) that approaches the pipette cartridge 40 from below and comes into contact with these wells from the sides and below in a so-called U-shape. This enables the solutions contained in these wells to be set to a temperature suitable for mixing or measurement in the optical measurement well 40f. In some embodiments, the heater may be configured to simultaneously heat a protease solution well 40g, a sensor calibration liquid well 40j, a preparation liquid well 40c, an indicator solution well 40d, and the optical measurement well 40f. In some embodiments, the heater may be configured to simultaneously heat the protease solution well 40g, the sensor calibration liquid well 40j, the preparation liquid well 40c, and the indicator solution well 40d. In some embodiments, the heater may be configured to heat only the optical measurement well 40f or heat the optical measurement well 40f separately. In some embodiments, the heater may be configured to separately heat the protease solution well 40g, the sensor calibration liquid well 40j, the preparation liquid well 40c, and the indicator solution well 40d, and the optical measurement well 40f.

A sensor attachment portion 40s to which a sensor (not illustrated) is to be attached is disposed on the rightmost side in the drawing. The sensor is manufactured separately and attached to the portion.

### <Application Examples>

Although the above embodiments and examples have been described based on the measurement of albumin and glycated albumin, the present disclosure is not limited thereto. In some embodiments, two different target substances to be measured can be measured substantially simultaneously or in parallel. One may undergo optical measurement, and the other may undergo electrochemical measurement. In some embodiments, optical measurement may be performed for one of the multiple forms of a substance due to deformation, modification, difference or presence or absence of bonding of a group, and so forth, and electrochemical measurement may be performed for another one of the multiple forms. The present disclosure provides various target substances and various measurement methods. Some application examples are given below by way of non-limiting illustration.

### <Application Example 1: Enzymatic Sensing>

In some embodiments, any microplate of the present disclosure may be used to perform enzymatic sensing. For example, a predetermined enzymatic reaction may be performed on various substrates, and the products may be measured by a sensor.

In some embodiments, sensing using a multi-step, two-step enzymatic reaction can be performed. The plurality of enzymatic reactions may have different indication conditions. A certain enzymatic reaction may rate-limit the entire enzymatic reaction. By separating enzymatic reactions and controlling each reaction accurately in terms of amount and time by pipetting, enzymatic sensing can be performed accurately and with little error.

### <Cholesterol>

In some embodiments, enzymatic sensing may be performed for cholesterol. Cholesterol and fatty acid are produced from cholesterol ester and water by the enzymatic reaction of cholesterol esterase. Cholestenone and hydrogen peroxide are produced from cholesterol and oxygen by the enzymatic reaction of cholesterol oxidase. By measuring oxygen and hydrogen peroxide at this time, the initial amount of cholesterol ester and/or cholesterol can be determined.

A cholesterol esterase solution and a cholesterol oxidase solution may be contained in respective predetermined wells. The sensor may include an oxygen electrode, a hydrogen peroxide electrode or other electrodes, or a combination thereof.

### <Sucrose>

In some embodiments, enzymatic sensing may be performed on sucrose. α-D-Glucose and fructose are produced from sucrose and water by the enzymatic reaction of invertase. β-D-Glucose is produced from α-D-glucose by the enzymatic reaction of mutarotase. Gluconolactone and hydrogen peroxide are produced from β-D-glucose and oxygen by the enzymatic reaction of glucose oxidase (GOX). By measuring oxygen and hydrogen peroxide at this time, the initial amount of sucrose and/or an intermediate product can be determined.

An invertase solution and a mutarotase solution may be contained in respective predetermined wells. The sensor may include an oxygen electrode, a hydrogen peroxide electrode or other electrodes, or a combination thereof.

In addition to the above substrates, a target molecule to be measured and the enzyme used are not limited to those described above. For example, one or more steps of enzymatic reactions may be performed on glucose, phosphatidylcholine, neutral fat, or other substrates in one or more wells, and an intermediate or final product of the enzymatic reaction may be detected by a sensor. In some embodiments, a solution may contain a cofactor. In some embodiments, a solution may contain an enzyme and a cofactor.

### <Application Example 2: Mediator-Type Sensing>

In some embodiments, glucose may be measured using GOX and a mediator (for example, a ferrocene derivative, 1, 4-benzoquinone, or tetrathiafulvalene) . The GOX and the mediator may be contained in respective wells.

In a conventional method, it is necessary to measure the pH of the system in a stable state after the mediator is added. For this reason, the sensitivity is not high. In this application example, for example, the pH can be adjusted to the reduction side, and the mediator can be added thereto. In its sensitive state, the measurement can be performed. The pH varies with time. However, from a state of high sensitivity, it is possible to measure a change in the output of the sensor over time. This enables more accurate and efficient measurement.

### <Application Example 3: Evaluation of Enzyme Potency>

In some embodiments, any microplate of the present disclosure may be used to measure the potency of an enzyme of interest. For example, enzyme potency may be evaluated.

In some embodiments, an enzyme to be evaluated is introduced into a first well. Thereby, an enzyme solution is prepared. A portion of the enzyme solution is taken and placed in an optical measurement well. This enzyme can be subjected to optical measurement to determine the total amount of enzyme initially present. A portion of the enzyme solution is taken and introduced into a second well. In the second well, an oxygen solution is mixed with a known amount or concentration of substrate. The substrate may be contained in the second well in advance, or may be introduced into the second well from another well or the outside before or after the introduction of the oxygen solution. Thereby, a substrate mixture is prepared. The substrate may be, for example, a glycated peptide or glycated lysine. Thereby, hydrogen peroxide is generated by an enzymatic reaction. After a predetermined time, this reaction liquid is taken and introduced into a sensor. The output may be measured as a function of time from the substantially initial time of the reaction between the substrate and the enzyme. The amount of enzyme that was active in the enzyme solution can be determined therefrom. From the total amount of enzyme and the amount of active enzyme, the potency of the enzyme can be determined.

In some embodiments, multiple sensors may be arranged. The multiple sensors may detect or quantify respective different target substances.

### <Application Example 4: Ratio Measurement>

In some embodiments, the ratio of two target substances may be determined. For example, the albumin/globulin ratio (A/G ratio) may be determined. Albumin and globulin may be treated with their respective solutions suitable therefor, and may be measured by respective methods or sensing suitable therefor.

### <Application Example 5: Balance Measurement>

In some embodiments, balance measurement may be performed. For example, an amino acid balance may be measured. In accordance with the functional group of each amino acid, multiple measurement methods (optical measurement and electrochemical measurement) may be used. For example, a metal balance may be measured (MB test). For example, a hormone balance may be measured.

### <Application Example 6: Water Quality Measurement>

In some embodiments, water quality can be measured. For example, the optical properties of a solution of interest can be evaluated by optical measurement. The optical measurement may be spectroscopic measurement. From the properties at each wavelength, the types and/or amounts of substances in the solution can be determined. Electrical measurements can be used to determine the pH, the amounts of electrolytes, etc. The optical and electrical properties of water can be combined to evaluate the quality of water of interest.

### <Application Example 7: Microorganism Sensing>

In some embodiments, microorganisms may be used to evaluate a target solution. A plant microorganism may be added to the target solution. In some embodiments, different microorganisms may be introduced into different wells. In some embodiments, one or more of the same microorganisms may be introduced into multiple wells, and light irradiation conditions may be set for each well. The mixed solution may be irradiated with light beams of multiple or predetermined wavelengths or intensities. The temperature in the well may be adjusted to a temperature suitable for each microorganism. Thereby, each microorganism generates oxygen by respiration. Alternatively, each plant microorganism generates carbon dioxide by photosynthesis. Their respiration and photosynthesis depend on water quality, which is an environmental indicator. After a predetermined reaction time, the solution is introduced into the sensor. The sensor measures the amount of oxygen and/or carbon dioxide in the solution. Thereby, water quality such as BOD can be measured.

The present disclosure also provides the following embodiments.
A001
   A microplate including:
   at least one (or a plurality of) well; and
   an electrochemical sensor.
A002
   A microplate for performing optical measurement and electrochemical measurement, including:
   at least one (or a plurality of) well;
   an optical measurement well; and
   an electrochemical sensor.
A011
   A microplate for performing optical measurement and electrical measurement, including:
   a diluent well containing a diluent;
   an optical measurement well containing a solution containing an indicator for a protein and a protease, the optical measurement well having an optical measurement window; and
   an electrochemical sensor.
A011b
   The microplate according to A011,
   in which any one of the dilution well and the optical measurement well contains a preparation liquid for optical measurement of a protein.
A012
   A microplate for performing optical measurement and electrical measurement, including:
   a diluent well containing a diluent;
   an optical measurement well containing an indicator solution for a protein and having an optical measurement window;
   a protease solution well containing a protease solution; and
   an electrochemical sensor.
A012b
   The microplate according to A012,
   in which any one of the dilution well and the optical measurement well contains a preparation liquid for optical measurement of a protein.
A013
   A microplate for performing optical measurement and electrical measurement, including:
   a diluent well containing a diluent;
   an indicator solution well containing an indicator solution for a protein;
   an optical measurement well having an optical measurement window;
   a protease solution well containing a protease solution; and
   an electrochemical sensor.
A013b The microplate according to A013,
   in which any one of the dilution well, the indicator solution well, and the optical measurement well contains a preparation liquid for optical measurement of a protein.
A014
   A microplate for performing optical measurement and electrical measurement, including:
   (a) a diluent well containing a diluent;
   (d) an indicator solution well containing an indicator solution;
   (e) a first stirring well for use in stirring a solution;
   (f) an optical measurement well having an optical measurement window;
   (g) a protease solution well containing a protease solution;
   (h) a second stirring well for use in stirring a solution; and
   (s) an electrochemical sensor.
A014b
   The microplate according to A014,
   in which any one of the wells (a) to (h) contains a preparation liquid for optical measurement of a protein.
A015
   A microplate for performing optical measurement and electrical measurement, including:
   (a) a diluent well containing a diluent;
   (b) a filter well fitted with a filter;
   (c) a preparation liquid well containing a preparation liquid for optical measurement of a protein;
   (d) an indicator solution well containing an indicator solution;
   (e) a first stirring well for use in stirring a solution;
   (f) an optical measurement well that enables entry of light from the outside and extraction of light to the outside;
   (g) a protease solution well containing a protease solution;
   (h) a second stirring well for use in stirring a solution;
   (i) a sensor cleaning liquid well containing a sensor cleaning liquid; and
   (s) an electrochemical sensor.
A015b
   The microplate according to A015,
   in which any one of the wells (a) to (i) contains a preparation liquid for optical measurement of a protein.
A016
   A microplate for performing optical measurement and electrical measurement, including:
   (a) a diluent well containing a diluent;
   (b) a filter well fitted with a filter;
   (c) a preparation liquid well containing a preparation liquid for optical measurement of a protein;
   (d) an indicator solution well containing an indicator solution;
   (e) a first stirring well for use in stirring a solution;
   (f) an optical measurement well that enables entry of light from the outside and extraction of light to the outside;
   (g) a protease solution well containing a protease solution;
   (h) a second stirring well for use in stirring a solution;
   (i) a sensor cleaning liquid well containing a sensor cleaning liquid;
   (j) a sensor calibration liquid well containing a sensor calibration liquid; and
   (s) an electrochemical sensor.
A016b
   A microplate for performing optical measurement and electrical measurement, including:
   (a) a diluent well containing a diluent;
   (b) a filter well fitted with a filter;
   (c) a preparation liquid well containing a preparation liquid for optical measurement of a protein;
   (d) an indicator solution well containing an indicator solution;
   (e) a stirring well for use in stirring a solution;
   (f) an optical measurement well that enables entry of light from the outside and extraction of light to the outside;
   (g) a protease solution well containing a protease solution;
   (i) a sensor cleaning liquid well containing a sensor cleaning liquid;
   (j) a sensor calibration liquid well containing a sensor calibration liquid; and
   (s) an electrochemical sensor.
A021
   The microplate according to any one of embodiments A001 to A016b, further including a waste liquid tank configured to receive a liquid discharged from the electrochemical sensor.
B001
   An automated measurement system for determining the degree of glycation of a protein, including:
   at least one pipette head;
   a microplate including at least one (or a plurality of) well, an optical measurement well, and an electrochemical sensor;
   a drive system to relatively move the pipette head and the microplate; and
   an electrical measurement unit configured to be coupled to the electrochemical sensor.
B002
   The system according to embodiment B001, further including:
   a temperature control system that controls the temperature of at least one portion of the microplate.
B003
   The system according to embodiment B002,
   in which the temperature control system includes a heater configured to move relative to the microplate and to approach at least one well.
B011
   The system according to embodiment B003, further including:
   a computer that controls at least one of operation of the drive system, heating by the heater, and operation of the heater.
C001
   A method for electrochemically measuring a target substance, including:
   providing the microplate according to any one of embodiments A001 to A021;
   providing a liquid potentially containing a target substance;
   introducing the liquid into any well of the microplate by pipetting;
   subjecting the liquid or the target substance to treatment required for measurement in the well or another well of the microplate;
   introducing the treated solution in the well into the electrochemical sensor by pipetting; and
   detecting or measuring the target substance using the electrochemical sensor.
C011
   A method for measuring the degree of glycation of a protein, including:
   providing the microplate according to embodiment A016;
   collecting a body fluid potentially containing a glycated protein;
   introducing the collected body fluid into the diluent well to prepare a dilute mixture;
   taking a predetermined amount of the mixture (dilute mixture) of the body fluid and the diluent from the diluent well, passing the dilute mixture through the filter of the filter well, and introducing the filtered dilute mixture into the filter well, by pipetting;
   removing the filter from the filter well;
   taking a predetermined amount of the solution (for example, an oxidizing agent) in the preparation liquid well from the preparation liquid filter well and introducing the solution into the first stirring well, by pipetting;
   taking a predetermined amount of the indicator solution (for example, BCP) from the indicator solution well into the first stirring well to prepare an indicator mixture, by pipetting;
   taking a predetermined amount of the filtered mixture from the filter well and introducing the filtered mixture into the first stirring well to prepare a mixture for optical measurement, by pipetting;
   taking a predetermined amount of the mixture for optical measurement from the first stirring well and introducing the mixture into the optical measurement well, by pipetting;
   measuring an optical property of the mixture for optical measurement in the optical measurement well;
   determining the amount of a protein based on the optical property of the mixture for optical measurement;
   taking a predetermined amount of the sensor cleaning liquid from the sensor cleaning liquid well and feeding the sensor cleaning liquid to the sensor, by pipetting;
   taking a predetermined amount of the sensor calibration liquid from the sensor calibration liquid well and feeding the sensor calibration liquid to the sensor, by pipetting;
   calibrating the sensor with the sensor calibration liquid;
   taking a predetermined amount of the protease solution from the protease solution well and introducing the protease solution into the second stirring well, by pipetting;
   taking a predetermined amount of the filtered mixture from the filter well and introducing the filtered mixture into the second stirring well to prepare a protease mixture, by pipetting;
   taking a predetermined amount of the protease mixture from the second stirring well at a predetermined time from protease introduction and introducing the protease mixture into the sensor, by pipetting;
   subjecting the protease mixture to electrical measurement with the sensor;
   determining the amount of the target glycated protein based on the electrical measurement; and
   determining the degree of glycation of the protein from the determined amount of the protein and the determined amount of the glycated protein.
C012 The method according to embodiment C011,
   in which the providing the protease mixture includes heating the solution in the second stirring well to activate a protease reaction.
C021
   A method for measuring the degree of glycation of a protein, including:
   providing the microplate according to embodiment A016b;
   collecting a body fluid potentially containing a glycated protein;
   introducing the collected body fluid into a diluent well to prepare a dilute mixture;
   taking a predetermined amount of the mixture (dilute mixture) of the body fluid and the diluent from the diluent well, passing the dilute mixture through the filter of the filter well, and introducing the filtered dilute mixture into the filter well, by pipetting;
   removing the filter from the filter well;
   taking a predetermined amount of the preparation liquid (for example, an oxidizing agent) from the preparation liquid well and introducing the preparation liquid into the optical measurement well, by pipetting;
   taking a predetermined amount of the indicator solution (for example, BCP) from the indicator solution well and introducing the indicator solution into the optical measurement well to prepare an indicator mixture, by pipetting;
   taking a predetermined amount of the filtered dilute mixture from the filter well and introducing the filtered dilute mixture into the optical measurement well to prepare a mixture for optical measurement, by pipetting;
   measuring an optical property of the mixture for optical measurement in the optical measurement well;
   determining the amount of a protein based on the optical property of the mixture for optical measurement;
   taking a predetermined amount of the sensor cleaning liquid from the sensor cleaning liquid well and feeding the sensor cleaning liquid to the sensor, by pipetting;
   taking a predetermined amount of the sensor calibration liquid from the sensor calibration liquid well and feeding the sensor calibration liquid to the sensor, by pipetting;
   calibrating the sensor with the sensor calibration liquid;
   taking a predetermined amount of the protease solution from the protease solution well and introducing the protease solution into the first stirring well, by pipetting;
   taking a predetermined amount of the filtered dilute mixture from the filter well and introducing the filtered dilute mixture into the first stirring well to prepare a protease mixture, by pipetting;
   heating the first stirring well with a heater around the first stirring well at a predetermined temperature for a predetermined time to react the protease mixture;
   taking a predetermined amount of the protease mixture from the first stirring well at a predetermined time from protease introduction and introducing the protease mixture into the sensor, by pipetting;
   subjecting the protease mixture to electrical measurement with the sensor;
   determining the amount of the target glycated protein based on the electrical measurement; and
   determining the degree of glycation of the protein from the determined amount of the protein and the determined amount of the glycated protein.
D001
   Computer software for causing a computer to perform the methods according to embodiments C001 to C012.
E001
   A storage medium storing the computer software according to embodiment D001.

While several embodiments and examples of the present disclosure have been described above, these embodiments and examples are used for exemplarily explanations of the present disclosure. For example, each of the embodiments described above has been described in detail in order to explain the present disclosure in an easy-to-understand manner, and dimensions, configurations, materials, and circuits may be additionally changed as necessary. Embodiments in which one or more of the above-mentioned features of the present disclosure are arbitrarily combined are also included in the scope of the present disclosure. It is intended that the appended claims cover numerous modifications to the embodiments without departing from the spirit and scope of the present disclosure. Accordingly, the embodiments and examples disclosed herein are presented for purposes of illustration and should not be construed as limiting the scope of the present disclosure.

## Claims

1. A microplate, comprising:
at least one or a plurality of wells; and
an electrochemical sensor.

2. A microplate for performing optical measurement and electrochemical measurement, comprising: at least one (or a plurality of) well;
an optical measurement well; and
an electrochemical sensor.

3. A microplate for performing optical measurement and electrical measurement, comprising:
a diluent well containing a diluent;
an optical measurement well containing a solution containing an indicator for a protein and a protease, the optical measurement well having an optical measurement window; and
an electrochemical sensor.

4. A microplate for performing optical measurement and electrical measurement, comprising:
a diluent well containing a diluent;
an optical measurement well containing an indicator solution for a protein and having an optical measurement window; a protease solution well containing a protease solution; and
an electrochemical sensor.

5. A microplate for performing optical measurement and electrical measurement, comprising:
a diluent well containing a diluent;
an indicator solution well containing an indicator solution for a protein;
an optical measurement well having an optical measurement window;
a protease solution well containing a protease solution; and
an electrochemical sensor.

6. A microplate for performing optical measurement and electrical measurement, comprising:
(a) a diluent well containing a diluent;
(d) an indicator solution well containing an indicator solution;
(e) a first stirring well for use in stirring a solution;
(f) an optical measurement well having an optical measurement window;
(g) a protease solution well containing a protease solution;
(h) a second stirring well for use in stirring a solution; and
(s) an electrochemical sensor.

7. A microplate for performing optical measurement and electrical measurement, comprising:
(a) a diluent well containing a diluent;
(b) a filter well fitted with a filter;
(c) a preparation liquid well containing a preparation liquid for optical measurement of a protein;
(d) an indicator solution well containing an indicator solution;
(e) a first stirring well for use in stirring a solution;
(f) an optical measurement well that enables entry of light from the outside and extraction of light to the outside;
(g) a protease solution well containing a protease solution;
(h) a second stirring well for use in stirring a solution;
(i) a sensor cleaning liquid well containing a sensor cleaning liquid; and
(s) an electrochemical sensor.

8. A microplate for performing optical measurement and electrical measurement, comprising:
(a) a diluent well containing a diluent;
(b) a filter well fitted with a filter;
(c) a preparation liquid well containing a preparation liquid for optical measurement of a protein;
(d) an indicator solution well containing an indicator solution;
(e) a first stirring well for use in stirring a solution;
(f) an optical measurement well that enables entry of light from the outside and extraction of light to the outside;
(g) a protease solution well containing a protease solution;
(h) a second stirring well for use in stirring a solution;
(i) a sensor cleaning liquid well containing a sensor cleaning liquid;
(j) a sensor calibration liquid well containing a sensor calibration liquid; and
(s) an electrochemical sensor.

9. The microplate according to any one of Claims 1 to 8, further comprising:
a waste liquid tank configured to receive a liquid discharged from the electrochemical sensor.

10. An automated measurement system for determining the degree of glycation of a protein, comprising:
at least one pipette head;
a microplate including at least one (or a plurality of) well, an optical measurement well, and an electrochemical sensor;
a drive system to relatively move the pipette head and the microplate; and
an electrical measurement unit configured to be coupled to the electrochemical sensor.

11. The system according to Claim 10, further comprising:
a temperature control system that controls the temperature of at least one portion of the microplate.

12. The system according to Claim 11,
wherein the temperature control system includes a heater configured to move relative to the microplate and to approach at least one well.

13. The system according to Claim 12, further comprising:
a computer that controls at least one of operation of the drive system, heating by the heater, and operation of the heater.

14. A method for electrochemically measuring a target substance, comprising:
providing the microplate according to any one of Claims 1 to 9;
providing a liquid potentially containing a target substance;
introducing the liquid into any well of the microplate by pipetting;
subjecting the liquid or the target substance to treatment required for measurement in the well or another well of the microplate;
introducing the treated solution in the well into the electrochemical sensor by pipetting; and
detecting or measuring the target substance using the electrochemical sensor.

15. A method for measuring the degree of glycation of a protein, comprising:
providing the microplate according to Claim 8;
collecting a body fluid potentially containing a glycated protein;
introducing the collected body fluid into the diluent well to prepare a dilute mixture;
taking a predetermined amount of the mixture (dilute mixture) of the body fluid and the diluent from the diluent well, passing the dilute mixture through the filter of the filter well, and introducing the filtered dilute mixture into the filter well, by pipetting;
removing the filter from the filter well;
taking a predetermined amount of the solution (for example, an oxidizing agent) in the preparation liquid well from the preparation liquid filter well and introducing the solution into the first stirring well, by pipetting;
taking a predetermined amount of the indicator solution (for example, BCP) from the indicator solution well into the first stirring well to prepare an indicator mixture, by pipetting;
taking a predetermined amount of the filtered mixture from the filter well and introducing the filtered mixture into the first stirring well to prepare a mixture for optical measurement, by pipetting;
taking a predetermined amount of the mixture for optical measurement from the first stirring well and introducing the mixture into the optical measurement well, by pipetting;
measuring an optical property of the mixture for optical measurement in the optical measurement well;
determining the amount of a protein based on the optical property of the mixture for optical measurement;
taking a predetermined amount of the sensor cleaning liquid from the sensor cleaning liquid well and feeding the sensor cleaning liquid to the sensor, by pipetting;
taking a predetermined amount of the sensor calibration liquid from the sensor calibration liquid well and feeding the sensor calibration liquid to the sensor, by pipetting;
calibrating the sensor with the sensor calibration liquid;
taking a predetermined amount of the protease solution from the protease solution well and introducing the protease solution into the second stirring well, by pipetting;
taking a predetermined amount of the filtered mixture from the filter well and introducing the filtered mixture into the second stirring well to prepare a protease mixture, by pipetting;
taking a predetermined amount of the protease mixture from the second stirring well at a predetermined time from protease introduction and introducing the protease mixture into the sensor, by pipetting;
subjecting the protease mixture to electrical measurement with the sensor;
determining the amount of the target glycated protein based on the electrical measurement; and
determining the degree of glycation of the protein from the determined amount of the protein and the determined amount of the glycated protein.

16. The method according to Claim 15,
wherein providing the protease mixture includes heating the solution in the second stirring well to activate a protease reaction.

17. Computer software for causing a computer to perform the methods according to Claims 14 to 16.
